# EUROPEAN PATENT APPLICATION

(11) **EP 4 424 753 A1**
(43) Date of publication of application: **04.09.2024**
(21) Application number: 23159768.3
(22) Date of filing: 02.03.2023
(51) Int. Cl.: C08J 9/00, C08J 9/06, C08J 9/12, C08J 9/14, C09K 21/14

(54) **FOAMABLE REACTION MIXTURE FOR MANUFACTURING OF FIRE PROTECTION PREFORMED ARTICLES, FIRE PROTECTION PREFORMED ARTICLE AND METHOD FOR MANUFACTURING OF FIRE PROTECTION PREFORMED ARTICLES**

(71) Applicant: Hilti Aktiengesellschaft, 9494 Schaan (LI)
(72) Inventor: Conceicao Alves Juster, Filipa, 86899 Landsberg am Lech (DE); Paetow, Mario, 86899 Landsberg am Lech (DE)
(74) Representative: Hilti Aktiengesellschaft Corporate Intellectual Property

(57) **Abstract**

The present invention relates to a foamable reaction mixture comprising a blend of at least two different alkoxysilane-functional polymers for manufacturing of fire protection preformed articles and to a fire protection preformed articles produced from the reaction mixture according to the invention. Furthermore, the invention relates to a method of manufacturing fire protection preformed articles and to construction elements comprising at least one fire protection preformed article according to the invention. The reaction mixture comprises at least a first alkoxysilane-functional polymer which is terminated with alkoxy-functional silane groups of the general formula (I) and/or has these as side groups along the polymer chain and at least a further alkoxysilane-functional polymer which is terminated with alkoxy-functional silane groups of the general formula (II) and/or has these as side groups along the polymer chain.

## Description

The present invention relates to a foamable reaction mixture comprising a blend of at least two different alkoxysilane-functional polymers for manufacturing of fire protection preformed articles and to fire protection preformed articles produced from the reaction mixture according to the invention. Furthermore, the invention relates to a method of manufacturing fire protection preformed articles and to construction elements comprising at least one fire protection preformed article according to the invention. The reaction mixture comprises at least one first alkoxysilane-functional polymer which is terminated with alkoxy-functional silane groups of the general formula (I) and/or has these as side groups along the polymer chain and at least a second alkoxysilane-functional polymer which is terminated with alkoxy-functional silane groups of the general formula (II) and/or has these as side groups along the polymer chain.

Currently, most fire protection foam products, i.e. on-site manufactured and preformed foams, are based on polyurethane (PU). Polyurethane is of concern in terms of health, safety and environment (HSE) as hazardous isocyanates are used in the foam production process. For this reason, there is a need for alternative material technologies to produce fire protection foam products that outperform polyurethane in terms of HSE aspects while meeting the requirements for fire protection applications in buildings.

Preformed foamed fire protection articles are usually manufactured off-site on production lines by multi-component extrusion and foaming in a predefined mold. Preformed fire protection articles can be used as molded parts or can be further processed.

The off-site production of fire protection preformed articles on large production lines means that production-relevant properties such as demolding and cutting time play a central role. And foam properties such as softness and deformation at break under compression play a central role in the application performance of the preformed article. It is therefore an object of the present invention to provide a reaction mixture for manufacturing fire protection preformed articles which can be produced without the use of isocyanates and thus outperform the polyurethane-based fire protection preformed articles known from the prior art in view of HSE properties. The fire protection properties of fire protection preformed articles made from the reaction mixture according to the invention should be at least comparable to the fire protection properties of polyurethane-based fire protection preformed articles known from the prior art.

It is a further object of the present invention that the fire protection preformed articles manufactured from the reaction mixture according to the invention should show improved producibility properties, particularly with respect to de-moulding and cutting time.

It is a further object of the present invention that the fire protection preformed articles should have an increased foam softness and flexibility, i.e. shown by the hardness at 40% compression and the deformation at break under compression.

It is a further object of the present invention that the fire protection preformed articles should show an improved char stability if the articles are exposed to heat.

Surprisingly, it was found that the problems underlying the invention are solved by a reaction mixture according to claim 1. Further embodiments of the invention are outlined in dependent claims and throughout the description.

A second object of the invention is also a method of manufacturing a fire protection preformed article.

A third object of the invention is a fire protection preformed article produced from the reaction mixture according to the invention or a fire protection preformed article manufactured by the method according to the invention.

A fourth object of the invention is also a construction element comprising at least one fire protection preformed article according to the invention.

For a better understanding of the invention, the following explanations of the terminology used herein are considered useful. In the sense of the invention:
- "*Reaction mixture*" means a composition comprising a blend of at least one alkoxysilane-functional polymer which is terminated and/or has alkoxy-functional silane groups of the general formula (I) as pendant groups along the polymer chain and at least one alkoxysilane-functional polymer which is terminated and/or has alkoxy-functional silane groups of the general formula (II) as pendant groups along the polymer chain. Furthermore, the reaction mixture comprises at least one intumescent composition, at least one blowing agent, at least one catalyst and at least one crosslinking agent. It is known to a skilled person that when the individual components of the reaction mixture are brought together, both a curing reaction and a foaming reaction occur. The term reaction mixture within the meaning of the present invention therefore encompasses all reaction states from the initial mixing of the constituents to the completion of the curing/foaming reactions.
- *"chemical intumescence"* means the formation of a voluminous, insulating char layer by means of compounds coordinated with one another, which react with one another when acted on by heat;
- *"physical intumescence"* means the formation of a voluminous insulating layer by the swelling of a compound which, without any chemical reaction having taken place between two compounds, releases gases when heat is applied, increasing the volume of the compound by many times its original volume;
- *"insulation-layer-forming"* that in the event of a fire, a firm micro-porous carbon foam is formed, so that the fine-pore and thick foam layer that is formed, called the char, insulates a substrate against heat.
- *"blowing agent'* means a collective term for physical and chemical blowing agents. In the case of chemical blowing agents, blowing agent mixtures are used which comprise at least two components which, when brought into contact with each other, cause the formation of gases as blowing agents, resulting in foaming of the composition.
- *"at least one"* numerically means "one or more". In a preferred embodiment, this term numerically means "one".
- *"comprise"* means that there may be other components in addition to those mentioned. The term "comprise" is meant inclusively and therefore includes "consist of". *"Consist* of' is meant conclusively and means that no further constituents may be present. In a preferred embodiment, the term "comprising" has the meaning *"consisting of".*

The reaction mixture according to the invention comprises:
i. at least one alkoxysilane-functional polymer which is terminated with alkoxy-functional silane groups of the general formula (I) and/or has alkoxy-functional silane groups of the general formula (I) as side groups along the polymer chain

   -X-R³-Si(R¹)ₘ(OR²)₃₋ₘ (I),

   in which R¹ is a linear or branched C₁-C₁₆ alkyl radical,
   R² represents -H or a linear or branched C₁-C₆ alkyl radical,
   R³ is an alkyl radical,
   X is -O-, a urethane group -HNCOO or a urea group -NHCONR⁴ with R⁴ = hydrogen, alkyl or aryl,
   m is an integer from 0 to 2,
ii. at least one intumescent additive,
iii. at least one blowing agent,
iv. at least one catalyst, and
v. at least one crosslinking agent,
   characterized in that the reaction mixture further comprises a second alkoxysilane-functional polymer which is terminated with alkoxy-functional silane groups of the general formula (II) and/or has these as side groups along the polymer chain

   -R⁷-Si(R⁵)ₙ(OR⁶)₃₋ₙ (II),

   wherein
   R⁵ represents a linear or branched C₁-C₁₆ alkyl radical,
   R⁶ is -H or a linear or branched C₁-C₆ alkyl radical,
   R⁷ is a linear or branched C₁-C₆ alkyl group, and
   n is an integer from 0 to 2.

The reaction mixture according to the invention comprises at least one alkoxysilane-functional polymer (also referred to as the first alkoxysilane-functional polymer) which is terminated with alkoxy-functional silane groups of the general formula (I) and/or has these as side groups along the polymer chain:

-X-R³-Si(R¹)ₘ(OR²)₃₋ₘ (I),

wherein R¹ is a linear or branched C₁-C₁₆ alkyl radical, preferably a methyl or ethyl radical, R² is -H or a linear or branched C₁-C₆ alkyl radical, preferably a methyl or ethyl radical, and m is an integer from 0 to 2, preferably 0 or 1. Most preferably, the at least two alkoxy-functional silane groups are di- (m = 1) or trifunctional (m = 0) and the alkoxy group is a methoxy or ethoxy group. R³ represents a linear or branched alkyl group having at least one carbon atom. Preferably, R³ is a C₁ to C₆ alkyl radical, more preferably a C₁ to C₃ alkyl radical, most preferably a methylene radical. According to the invention X stands for -O-, a urethane group -HNCOO or for a urea group -NHCONR⁴ with R⁴ being hydrogen, alkyl or aryl. In the case that the alkoxysilane-functional polymer contains more than one alkoxy-functional silane group, the groups X are selected independently. In a preferred embodiment, all groups X of the alkoxy-functional polymer are either urethane groups or urea groups.

According to the invention, the alkoxy-functional silane groups of formula (I) are bonded to the polymer backbone of the first alkoxysilane-functional polymer via a group X. In case that X represents a urethane or a urea group and R³ represents a methyl group, an electronic interaction (back-bonding) between the silicon atom and the electron donor takes place, whereby electron density is shifted from the donor to the silicon atom, resulting in a weakening of the Si-O bond, which in turn is reflected in a strongly increased reactivity of the Si-alkoxy groups. This is known as the so called α-effect. Such compounds are also called α-silanes. However, γ-silanes or other types of silanes can also be used.

In a preferred embodiment, the alkoxysilane-functional polymer comprises a backbone selected from the group consisting of a polyurethane, polyether or mixtures thereof. This means that the backbone of the alkoxysilane-functional polymer is a polyether homopolymer or a polyurethane homopolymer, or that the backbone of the alkoxysilane-functional polymer is a copolymer formed from ether and urethane units. The backbone may be linear or branched (linear backbone with side chains along the chain of the backbone) and contains terminal, i.e. as end groups of a linear backbone or as end groups of the branched backbone and as end groups of the side groups, alkoxy-functional silane groups, preferably at least two alkoxy-functional silane groups.

For the purposes of the present invention, a polymer is a molecule having six or more repeating units, which may have a structure that is linear, branched, star-shaped, coiled, hyperbranched, or crosslinked. Polymers may have a single type of repeating units ("homopolymers") or they may have more than one type of repeating units ("copolymers").

Examples of suitable polymers serving as first alkoxysilane-functional polymer include silane-terminated polyethers (e.g. Geniosil^{®} STP-E 10, Geniosil^{®} STP-E 30 and Geniosil^{®} STP-E 35 from Wacker Chemie AG; Desmoseal S XP 2744, Desmoseal S XP 2636, Desmoseal S XP 2458, Desmoseal S XP 2749 from Covestro; Polymer ST 77, Polymer ST 61, Polymer ST 61 LV, Polymer ST 80, Polymer ST 81 from Evonik, SPUR+ 1012 prepolymer, SPUR+ 1015 prepolymer, SPUR+ 1050 prepolymer, SPUR+ 1060 prepolymer, SPUR+ 3030 prepolymer, SPUR+ 3040 prepolymer, SPUR+ 3060 prepolymer from Momentive and Si-PolyU XP 4020-1, Si-PolyU XP 2550-1 and Si-PolyU XP 5013-1 from PolyU GmbH.

The alkoxysilane-functional polymer may also be a mixture of two or more of the previously described polymers.

Preferably, the first alkoxysilane-functional polymer has a dynamic viscosity in the range of 60 and 0.1 Pas, preferably in the range of 25 and 0.3 Pas. The dynamic viscosity is determined by DMA (dynamic mechanical analysis) using a rheometer.

Preferably, the first alkoxysilane-functional polymer has a number average molecular weight in the range of from 500 to 20,000 g/mol.

According to the invention, the reaction mixture comprises, in addition to the first alkoxysilane-functional polymer, at least one further alkoxysilane-functional polymer (also referred to as second alkoxysilane-functional polymer) which is terminated with alkoxy-functional silane groups of the general formula (II) and/or has these as side groups along the polymer chain

-R⁷-Si(R⁵)ₙ(OR⁶)₃₋ₙ (II),

wherein
R⁵ represents a linear or branched C₁-C₁₆ alkyl radical, preferably a C₁-alkyl radical,
R⁶ is -H or a linear or branched C₁-C₆ alkyl radical, preferably a C₁-alkyl radical,
R⁷ is a linear or branched C₁ to C₆ alkyl group, and
n is an integer from 0 to 2, preferably 0 or 1.

The further alkoxysilane-functional polymer, unlike the first alkoxysilane-functional polymer, does not have urethane or urea groups linking the alkoxy-functional silane groups to the polymer backbone.

Preferably, the second alkoxysilane-functional polymer comprises a backbone selected from the group consisting of poly(meth)acrylate and polyether.

Preferably, the second alkoxysilane-functional polymer has a lower dynamic viscosity than the first alkoxysilane-functional polymer, preferably up to 20 Pas, more preferably up to 15 Pas, further preferably up to 5 Pas.

Preferably, the second alkoxysilane-functional polymer has a lower number average molecular weight than the first alkoxysilane-functional polymer, preferably up to 20,000 g/mol, in particular in the range of 500 to 10,000 g/mol.

Examples of suitable alkoxysilane functional polymers serving as second alkoxysilane in the sense of the present invention include functional polymers Kaneka MS Polymer^{™} S203H, Kaneka MS Polymer^{™} S303H, Kaneka Silyl^{®} SAX260, Kaneka Silyl^{®} SAX350, Kaneka Silyl^{®} SAX530, Kaneka Silyl^{®} SAX590, Kaneka Silyl^{®} SAT010, Kaneka Silyl^{®} SAX015, Kaneka Silyl^{®} SAX115, Kaneka Silyl^{®} SAT145 from Kaneka.

Usually, the total amount of all alkoxysilane-functional polymers in the reaction mixture (first and second alkoxysilane-functional polymers) is 10 to 90 wt.-%, preferably 15 to 85 wt.-%, more preferably 20 to 80 wt%, most preferably 35 to 65 wt.-% each based on the total weight of the reaction mixture.

According to the invention, the reaction mixture contains a crosslinking agent, in particular at least one vinylalkoxysilane such as vinyltrimethoxysilane. In a particularly preferred embodiment, the vinylalkoxysilane is used in combination with water.

The water content of the reaction mixture is preferably between 0.1 and 20% by weight, more preferably between 0.5 and 10% by weight, based on the total weight of the reaction mixture.

According to the invention, the reaction mixture contains an intumescent additive, wherein the additive may comprise a single compound or a mixture of several compounds.

It is expedient to use as intumescent additives those which, under the action of heat, expand and form an insulating layer of flame-retardant material. The formation of a voluminous insulating layer, namely a char layer, can be formed by the chemical reaction of a mixture of appropriate matched compounds which react with each other when exposed to heat. Such systems are known to those skilled in the art under the term chemical intumescence and can be used in accordance with the invention. Alternatively, the voluminous insulating layer can be formed by physical intumescence. Both systems can be used alone or together as a combination according to the invention.

Formation of an intumescent layer by chemical intumescence generally requires at least three components, a carbon supplier, a dehydrogenation catalyst and a gas-forming agent, which are often contained in a binder. When exposed to heat, the binder softens and the fire retardant additives are released, allowing them to react with each other in the case of chemical intumescence or to inflate in the case of physical intumescence. Through thermal decomposition, the acid is formed from the dehydrogenation catalyst, which serves as a catalyst for the carbonization of the carbon supplier. At the same time, the gas former decomposes thermally to form inert gases, which cause the carbonized (charred) material and, if necessary, the softened binder to expand, forming a voluminous, insulating foam.

In one embodiment of the invention, in which the insulating layer is formed by chemical intumescence, the intumescent additive comprises at least one carbon skeleton former if the binder cannot be used as such, at least one acid former, at least one gas-forming agent and at least one inorganic skeleton former. In particular, the components of the additive are selected so that they can develop synergism, some of the compounds being able to perform several functions.

Suitable carbon suppliers include compounds commonly used in intumescent flame retardants and known to those skilled in the art, such as starch-like compounds, e.g. starch and modified starch, and/or polyhydric alcohols (polyols), such as saccharides and polysaccharides and/or a thermoplastic or thermosetting polymeric resin binder, such as a phenolic resin, a urea resin, a polyurethane, polyvinyl chloride, poly(meth)acrylate, polyvinyl acetate, polyvinyl alcohol, a silicone resin and/or a rubber. Suitable polyols are polyols from the group consisting of sugar, pentaerythritol, dipentaerythritol, tripentaerythritol, polyvinyl acetate, polyvinyl alcohol, sorbitol, EO polyols, PO polyols and EO-PO polyols. Pentaerythritol, dipentaerythritol or polyvinyl acetate are preferably used.

It should be mentioned that the polymer, which serves as a binder, can itself also have the function of a carbon supplier in the event of fire, so that the addition of an additional carbon supplier is not always necessary.

Suitable dehydrogenation catalysts or acid formers are compounds commonly used in intumescent fire protection formulations and known to those skilled in the art, such as a salt or ester of an inorganic, non-volatile acid selected from sulfuric acid, phosphoric acid or boric acid. Essentially, phosphorus-containing compounds are used, the range of which is very wide since they span several oxidation states of phosphorus, such as phosphines, phosphine oxides, phosphonium compounds, phosphates, elemental red phosphorus, phosphites and phosphates. As phosphoric acid compounds may be mentioned by way of example: Monoammonium phosphate, diammonium phosphate, ammonium phosphate, ammonium polyphosphate, melamine phosphate, melamine resin phosphates, potassium phosphate, polyol phosphates such as pentaerythritol phosphate, glycerol phosphate, sorbitol phosphate, mannitol phosphate, dulcite phosphate, neopentyl glycol phosphate, ethylene glycol phosphate, dipentaerythritol phosphate, and the like. Preferably, the phosphoric acid compound used is a polyphosphate or an ammonium polyphosphate. Melamine resin phosphates are understood to be compounds such as reaction products of Lamelite C (melamine-formaldehyde resin) with phosphoric acid. As sulfuric acid compounds may be mentioned by way of example: Ammonium sulfate, ammonium sulfamate, nitroaniline bisulfate, 4-nitroaniline-2-sulfonic acid and 4,4-dinitrosulfanilamide and the like. As a boric acid compound, melamine borate may be mentioned by way of example.

The compounds commonly used in flame retardants and known to those skilled in the art can be considered as gas-forming agents, such as cyanuric acid or isocyanic acid and their derivatives, melamine and its derivatives. Such are cyanamide, dicyanamide, dicyandiamide, guanidine and its salts, biguanide, melamine cyanurate, cyanic acid salts, cyanic acid esters and amides, hexamethoxymethylmelamine, dimelamine pyrophosphate, melamine polyphosphate, melamine phosphate. Hexamethoxymethylmelamine or melamine (cyanuric acid amide) is preferably used.

In one embodiment of the invention, in which the insulating layer is formed by physical intumescence, the insulating layer-forming additive comprises at least one thermally expandable compound, such as a graphite intercalation compound, also known as expandable graphite.

Examples of expandable graphite are known intercalation compounds of sulfuric acid, nitric acid, acetic acid, Lewis acids and/or other strong acids in graphite. These are also referred to as graphite salts. Preferred are expandable graphite that release SO₂, SO₃, CO₂, H₂O, NO and/or NO₂ at temperatures of, for example, 120 to 350°C. The expandable graphite can be in the form of platelets with a maximum diameter in the range of 0.1 to 5 mm, for example. Preferably, this diameter is in the range of 0.5 to 3 mm. Expandable graphites suitable for the present invention are commercially available.

In another embodiment of the invention, the insulating layer is formed by both chemical and physical intumescence, such that the insulating layer-forming additive comprises both a carbon supplier, a dehydrogenation catalyst, and a gas-forming agent, as well as thermally expandable compounds.

In principle, the intumescent additive can be present in the reaction mixture in a wide weight percentage range, namely preferably in an amount of 10 to 70% by weight based on the total weight of the reaction mixture. If the insulating layer is formed by physical intumescence, the intumescent additive is preferably present in an amount of 10 to 45% by weight based on the total weight of the reaction mixture. In order to bring about the highest possible intumescence rate here, the proportion of the intumescent additive in the overall formulation is set as high as possible, although care must be taken to ensure that the viscosity of the reaction mixture does not become too high so that the reaction mixture can still be easily processed. Preferably, the proportion is 5 to 50 wt.%, and particularly preferably 10 to 45 wt.%, based on the total weight of the reaction mixture.

Since the char formed in the event of fire is generally too unstable and, depending on its density and structure, can be blown away by air currents, for example, which has a negative effect on the insulating effect, at least one char stabilizer is preferably added to the components just listed. The principal mode of action is that the carbon layers, which are very soft in themselves, are mechanically strengthened by inorganic compounds. The addition of such a char stabilizer contributes to a substantial stabilization of the intumescent crust in case of fire, since these additives increase the mechanical strength. Suitable char stabilizers include compounds commonly used in fire retardant formulations and known to those skilled in the art, for example, expandable graphite and particulate metals, such as aluminum, magnesium, iron and zinc. The particulate metal may be in the form of a powder, platelets, flakes, fibers, filaments and/or whiskers, wherein the particulate metal in the form of powder, platelets or flakes has a particle size of <50 µm, preferably from 0.5 to 10 µm. In the case of using the particulate metal in the form of fibers, filaments and/or whiskers, a thickness of 0.5 to 10 µm and a length of 10 to 50 µm is preferred. Alternatively or additionally, an oxide or a compound of a metal from the group comprising aluminum, magnesium, iron or zinc can be used as an ash crust stabilizer, in particular iron oxide, preferably iron trioxide, titanium dioxide, a borate, such as zinc borate and/or a glass frit of low-melting glasses with a melting temperature preferably at or above 400°C, phosphate or sulfate glasses, melamine polyzinc sulfates, ferro glasses or calcium borosilicates. The addition of such a char stabilizer contributes to a substantial stabilization of the char in the event of fire. Examples of such additives can also be found in US 4 442 157 A, US 3 562 197 A, GB 755 551 A and EP 138 546 A1.

In addition, char stabilizers such as melamine phosphate or melamine borate may be included.

Optionally, one or more flame retardants may be added to the reaction mixture according to the invention, such as phosphate esters, halogen-containing compounds such as tri-(2-chloroisopropyl) phosphate (TOPP), tris(2-ethylhexyl) phosphate, dimethyl propane phosphonate, triethyl phosphate, and the like. Such compounds are described, for example, in S. V Levchik, E. D Weil, Polym. Int. 2004, 53, 1901-1929. The flame retardants may preferably be present in an amount of 3 to 6% by weight, based on the total weight of the reaction mixture.

According to the invention, the reaction mixture contains a blowing agent. In principle, all chemical and physical blowing agents known to the skilled person can be considered as blowing agents. These include, in particular, chemical blowing agents capable of releasing CO₂ or H₂. Accordingly, the reaction mixture preferably contains a blowing agent mixture comprising compounds which, after mixing, react with one another to form carbon dioxide (CO₂), hydrogen (H₂) or oxygen (O₂).

Preferably, the reaction mixture comprises as blowing agent at least one blowing agent mixture comprising one or more compounds capable of releasing hydrogen (H₂).

For this purpose, preferably the reaction between the following compounds is used:
(i) one or more base metals (e.g. aluminum, iron or zinc) with bases (e.g. one or more alkali metal hydroxides, such as sodium hydroxide, potassium hydroxide or lithium hydroxide) or with one or more acids (preferably inorganic acid);
(ii) metal hydrides (e.g. sodium hydride or lithium aluminum hydride) with water, or
(iii) a compound containing Si-bonded hydrogen atoms (e.g. polymethylhydrogensiloxane, also known as polymethylhydrosiloxane, but also other polyalkyl- or polyarylhydrogensiloxanes) with proton donors (e.g. water). Suitable materials include linear polyhydrogensiloxanes, tetramers, copolymers of dimethysiloxane and methylhydrosiloxane, trimethylsilyl-terminated polyhydrogensiloxanes, hydride-terminated polydimethylsiloxanes, triethylsilyl-terminated polyethylhydrosiloxanes, hydride-terminated copolymers of polyphenylmethylsiloxane and methylhydrosiloxane, and the like.

The use of a blowing agent mixture comprising a compound containing Si-bonded hydrogen atoms is preferred. Particularly suitable Si-H containing compounds are organohydrogensiloxanes, such as poly(methylhydrogensiloxane) (PMHS) with different M_{w} values. Commercially available are, for example, SilForce SS4300C (Momentive) and BLUESIL WR 68 (Elkem silicones).

Suitable proton donors include, for example, water and OH-containing compounds, especially those of lower molecular weight such as methanol, ethanol, propanol, butanol, pentanol, hexanol, heptanol, related diols such as (tri)ethylene glycol and propylene glycol, related cyclic and aromatic alcohols and diols such as cyclohexanol and benzyl alcohol, and mixtures thereof.

According to the invention, the reaction mixture also comprises a catalyst which promotes both the reaction of the alkoxy-functional silane groups with water, the subsequent condensation of the silanol thus formed and the foaming reaction. Advantageously, no metal-based catalysts are used here, since these are also frequently hazardous to health and subject to labeling under HSE aspects.

In a preferred embodiment of the invention, the reaction mixture comprises an organic base as catalyst. This advantageously promotes foaming and curing of the reaction mixture. Organic bases are advantageous over inorganic bases because they typically do not need to be dissolved in water.

Preferably, the organic base is present in an amount of > 0-10 wt.%, in particular 1-5 wt.%, in the reaction mixture based on the total weight of the reaction mixture.

Preferably, the organic base is selected from 1,1,3,3-tetramethylguanidine (TMG), 1-phenylguanidine, 1,3-diphenylguanidine, 1-(o-tolyl)biguanide, 1,5-diazabicyclo [4.3.0] - non-5-ene (DBN), 1,8-diazabicyclo-[5.4. 0]-undec-7-ene (DBU), N,N,N',N'-tetrakis(2-hydroxypropyl)ethylenediamine (Quadrol ^{®}), 1,4-diazabicyclo[2.2. 2]octanes (DABCO), 4-dimethylaminopyridines (DMAP), N,N,N',N",N"-pentamethyldiethylenetriamines (PMDETA), triethylamine, tributylamine, and trioctylamine.

The reaction mixture according to the invention can also contain a cell regulator/stabilizer. Suitable cell regulators/stabilizers are, for example, alkyl polyglycosides. These can be obtained by methods known to the skilled person by reacting longer-chain monoalcohols with mono-, di- or polysaccharides. The longer-chain monoalcohols, which may also be branched, preferably have 4 to 22 C atoms, preferably 8 to 18 C atoms and particularly preferably 10 to 12 C atoms in an alkyl radical. Specifically mentioned as longer-chain monoalcohols are 1-butanol, 1-propanol, 1-hexanol, 1-octanol, 2-ethylhexanol, 1-decanol, 1-undecanol, 1-dodecanol (lauryl alcohol), 1-tetradecanol (myristyl alcohol) and 1-octadecanol (stearyl alcohol). Mixtures of the aforementioned longer-chain monoalcohols can also be used. Other foam stabilizers include anionic, cationic, amphoteric and nonionic surfactants known per se, as well as mixtures thereof. Alkyl polyglycosides, EO/PO block copolymers, alkyl or aryl alkoxylates, siloxane alkoxylates, polyether polysiloxanes, esters of sulfosuccinic acid and/or alkali metal or alkaline earth metal alkanoates are preferably used. EO/PO block copolymers are particularly preferred.

In one embodiment, the reaction mixture further comprises at least one further component selected from plasticizers, crosslinking agents, biocides, organic and/or inorganic aggregates and/or further additives.

In addition to the additives already described, the reaction mixture may optionally contain conventional auxiliaries such as wetting agents, for example based on polyacrylates and/or polyphosphates, dyes, fungicides, or various fillers such as vermiculite, inorganic fibers, silica sand, microglass beads, mica, silicon dioxide, mineral wool, and the like.

The reaction mixture according to the invention can be used for manufacturing of fire protection preformed articles.

Thus, a further object of the present invention is a method of manufacturing a fire protection preformed article comprising the following steps:
i. providing the following components:
   a) at least one alkoxysilane-functional polymer which is terminated with alkoxy-functional silane groups of the general formula (I) and/or has alkoxy-functional silane groups of the general formula (I) as side groups along the polymer chain

      -X-R³-Si(R¹)ₘ(OR²)₃₋ₘ (I),

      in which R¹ is a linear or branched C₁-C₁₆ alkyl radical,
      R² represents -H or a linear or branched C₁-C₆ alkyl radical,
      R³ is an alkyl radical,
      X is -O-, a urethane group -HNCOO or a urea group -NHCONR⁴ with R⁴ = hydrogen, alkyl or aryl,
      m is an integer from 0 to 2,
   b) at least one further alkoxysilane-functional polymer which is terminated with alkoxy-functional silane groups of the general formula (II) and/or has these as side groups along the polymer chain

      -R⁷-Si(R⁵)ₙ(OR⁶)₃₋ₙ (II),

      wherein
      R⁵ represents a linear or branched C₁-C₁₆ alkyl radical,
      R⁶ is -H or a linear or branched C₁-C₆ alkyl radical,
      R⁷ is a linear or branched C₁ to C₆ alkyl group, and
      n is an integer from 0 to 2,
   c) at least one intumescent additive,
   d) at least one blowing agent,
   e) at least one crosslinking agent,
ii. Mixing the components mentioned in i. and adding at least one catalyst to produce a reaction mixture;
iii. Discharging of the reaction mixture into a mold or a foil with predefined geometry;
iv. Foaming and curing of the reaction mixture and
v. Optionally, removing the foamed and cured reaction mixture from the mold or foil, or cutting it to size.

For the method according to the invention, with respect to the first alkoxy-functional polymer, the further alkoxy-functional polymer, the intumescent additive, the blowing agent mixture, the catalyst and the crosslinking agent, the above-described embodiments apply to the same extent.

A further object of the present invention is also a fire protection preformed article manufactured from the reaction mixture according to the invention or by the method according to the invention. The term "fire protection preformed article" within the meaning of the present invention is to be understood to mean all fire protection partitioning materials in the form of a defined molded body which are introduced into a passage opening in structural construction elements, in particular building components such as walls and ceilings, for the purpose of protecting against the passage of fire in the event of a fire. These include, for example, fire protection cushions, fire protection blocks, fire protection joints and profile elements.

The fire protection preformed article may have any shape, preferably a rectangular cross-section. This allows the fire protection preformed article to be processed particularly easily and without gaps in a wall or ceiling opening.

The fire protection elements can be cut to a length of, for example, 80 cm for easy handling during packaging and transport. Before installation, the profile pieces can be cut to shorter pieces by a user, if required.

A further object of the invention is a construction element comprising at least one fire protection preformed article according to the invention.

The following examples serve for a further explanation of the invention. However, the invention is not limited to the specific embodiments shown in the examples.

### EXEMPLARY EMBODIMENTS

All ingredients of the compositions listed here are - unless otherwise stated - commercially available and have been used in the commercial quality.

All % figures given in the examples refer to the total weight of the composition described as the basis for calculation, unless otherwise stated.

List of components used in the examples and references (explanation of abbreviations) and their trade names and sources:

**Table 1: Components used in the examples according to the invention.**

| **Compound/Tradename** | **Function** |
|---|---|
| Desmoseal^{®} S XP 2821 | First alkoxysilane-functional polymer |
| Kaneka MS Polymer^{™} SAT010 | Second alkoxysilane-functional polymer |
| Poly(methylhydrosiloxane) (PMHS) | Part of the blowing agent to generate H₂ |
| 1,1,3,3-Tetramethylguanidine (TMG) | Organic catalyst |
| Dynasylan VTMO | Water scavenger |
| Filler mix (including intumescent additive) | Comprising expandable graphite, ammonium polyphosphate and pigment |

The comparative examples and the examples according to the invention were prepared according to the components given in Tables 2 to 4. To prepare a foam, an appropriate amount of the specified components was stirred mechanically one after the other in a suitable container (e.g. paper cup) with a wooden spatula until a homogeneous mixture was formed. The resulting reaction mixture was poured into a mold and allowed to foam and cure.

**Table 2: Composition of comparison examples 1 and 2 and example 1 according to the invention [in wt.%]**

| **Example** | **Comparison example 1 (**EP3298069 B1**)** | **Comparison example 2** | **Example 1** |
|---|---|---|---|
| Desmoseal^{®} SXP 2821 | 58.6 | 58.6 | 48.25 |
| Kaneka MS Polymer^{™} SAT010 | - | - | 15.75 |
| Polymethylhydro-siloxane (PHMS) | 5.9 | 5.9 | 2.0 |
| Dynasylan VTMO | - | - | 1.0 |
| 1,1,3,3-Tetramethyl-guanidine (TMG) | - | - | 4.0 |
| Water | 7.4 | 7.4 | 4.0 |
| NaOH | 1.4 | 1.4 | - |
| Levagard PP | 3.4 | 3.4 | - |
| Filler mix including intumescent additive | 23.3 | 23.3 | 25.0 |
| ATH HN 434 | 1.9 | - | - |
| Charmor PM 40 | 1.5 | - | - |
| Omyacarb 5SV of Omya | 3.2 | - | - |
| Milisil W12 | 0.5 | - | - |
| Swellable layer silicate | 0.1 | - | - |
| Cabosil TS 720 | 0.1 | - | - |

**Table 3: Composition of examples 2 to 4 according to the invention [in wt.%]**

| **Example** | **Example 2** | **Example 3** | **Example 4** |
|---|---|---|---|
| Desmoseal^{®} SXP 2821 | 52.5 | 45.5 | 35.0 |
| Kaneka MS Polymer^{™} SAT010 | 17.5 | 24.5 | 35.0 |
| Polymethylhydro-siloxane (PHMS) | 2.0 | 2.0 | 2.0 |
| Dynasylan VTMO | 1.0 | 1.0 | 1.0 |
| 1,1,3,3-Tetramethyl-guanidine (TMG) | 4.0 | 4.0 | 4.0 |
| Water | 4.0 | 4.0 | 4.0 |
| Filler mix | 19.0 | 19.0 | 19.0 |

**Table 4: Composition of examples 5 to 8 according to the invention [in wt.%]**

| **Example** | **Example 5** | **Example 6** | **Example 7** | **Example 8** |
|---|---|---|---|---|
| Total polymer blend (75% Desmoseal^{®} SXP 2821 + 25% Kaneka MS Polymer^{™} SAT010) | 720 | 70.0 | 66.0 | 63.0 |
| Polymethylhydrosilox ane (PHMS) | 2.0 | 2.0 | 2.0 | 2.0 |
| Dynasylan VTMO | 1.0 | 1.0 | 1.0 | 1.0 |
| 1,1,3,3-Tetramethyl-guanidine (TMG) | 4.0 | 4.0 | 4.0 | 4.0 |
| Water | 2.0 | 4.0 | 8.0 | 11.0 |
| Filler mix | 19.0 | 19.0 | 19.0 | 19.0 |

### Determination of de-moulding and cutting time

De-moulding and cutting time are the time taken from the moment the foam is poured into the mould until it can be manually removed and/or cut by means of an electrical saw blade without incurring in irreversible structure damage.

### Determination of hardness (at 40% compression)

For the measurement of the foam hardness a texture analyzer CT3 from Brookfield is utilized. Foam specimen with 2 cm thickness are submitted to two compression cycles until 40% at 2 mm/s by a glass cylinder TA 10. The maximal force attained in the second cycle is recorded. The procedure is repeated for at least 3 specimen and obtained values are averaged.

### Compression deformation at failure

A texture analyzer CT3 from Brookfield and associated TA 10 glass cylinder for compression is utilized. Foam specimen with 2 cm thickness are incrementally compressed at a rate of 2 mm/s until failure is observed. The procedure is repeated for at least 3 specimen and obtained values are averaged.

### Char hardness

Foam's resulting chars are obtained by submitting cylindrical foam specimen with 5 cm diameter and 2 cm thickness to macro-thermomechanical analysis in a Macro-TMA 2 apparatus developed by Hilti and ASG (Analytic-Service Gesellschaft in Augsburg). Specimen are imposed a load of 100 g and heated to from ambient temperature to 650°C at a rate of 15K/min. Obtained chars are then subject to penetration by a TA7 element in a CT3 texture analyzer from Brookfield. The highest attained force is recorded. The procedure is repeated for at least 3 specimen and obtained values are averaged.

**Table 5: Presentation of results**

| | **Comp. 1** | **Comp. 2** | **Ex. 1** | **Ex. 2** | **Ex. 3** | **Ex. 4** | **Ex. 5** | **Ex. 6** | **Ex. 7** | **Ex. 8** |
|---|---|---|---|---|---|---|---|---|---|---|
| Density [g/L] | 200 | 200 | 200 | 160 | 170 | 190 | 184 | 182 | 223 | 286 |
| De-molding and cutting time [min.] | 6 | 6 | 3 | n.d. | n.d. | n.d. | n.d. | n.d. | n.d. | n.d. |
| Hardness (40% compression) | 20.6 ± 1.7 N | 15 ± 1.4 N | 7.3 ± 0.4 N | 6.0 ± 0.4 N | 5.5 ± 0.2 N | ± 0.2 N | 7.1 ± 0.15 N | 6.6 ± 0.7 N | 13 ± 1.6 N | 21 ± 2.2 N |
| Compression deformation at failure | 50% (25.5 ± 2 N) | 50% (19 ± 3.6 N) | 80% (33 ± 1 N) | n.d | n.d | n.d. | n.d. | n.d. | n.d. | n.d. |
| Char hardness | 4.2 ± 0.2 N | 2.1 ± 0.2 N | 5.9 ± 0.7 N | 2.3 ± 0.07 N | 2.8 ± 0.3 N | 3 ± 0.7 N | n.d. | n.d. | n.d. | n.d. |

## Claims

1. Reaction mixture according to the invention comprising,
i. at least one first alkoxysilane-functional polymer which is terminated with alkoxy-functional silane groups of the general formula (I) and/or has alkoxy-functional silane groups of the general formula (I) as side groups along the polymer chain
-X-R³-Si(R¹)ₘ(OR²)₃₋ₘ (I),
in which R' is a linear or branched C₁-C₁₆ alkyl radical,
R² represents -H or a linear or branched C₁-C₆ alkyl radical,
R³ is an alkyl radical,
X is -O-, a urethane group -HNCOO or a urea group -NHCONR⁴ with R⁴ = hydrogen, alkyl or aryl,
m is an integer from 0 to 2,
ii. at least one intumescent additive,
iii. at least one blowing agent,
iv. at least one catalysator, and
v. at least one crosslinking agent,
**characterized in that** the reaction mixture further comprises a second alkoxysilane-functional polymer which is terminated with alkoxy-functional silane groups of the general formula (II) and/or has these as side groups along the polymer chain
-R⁷-Si(R⁵)ₙ(OR⁶)₃₋ₙ (II),
wherein
R⁵ represents a linear or branched C₁-C₁₆ alkyl radical,
R⁶ is -H or a linear or branched C₁-C₆ alkyl radical,
R⁷ is a linear or branched C₁-C₆ alkyl group, and
n is an integer from 0 to 2.

2. Reaction mixture according to claim 1, wherein the blowing agent comprises a mixture of compounds which, after mixing thereof, react with each other to form hydrogen (H₂).

3. Reaction mixture according to claim 1 or 2, wherein the first alkoxysilane-functional polymer carries at least two alkoxy-functional silane groups.

4. Reaction mixture according to any one of claims 1 to 3, wherein the first alkoxysilane-functional polymer comprises a polymer backbone selected from the group consisting of polyurethane, polyether or mixtures thereof.

5. Reaction mixture according to any one of claims 1 to 3, wherein the backbone of the second alkoxysilane-functional polymer comprises a polymer backbone selected from the group consisting of poly(meth)acrylate and polyether.

6. Reaction mixture according to any one of the preceding claims, wherein the crosslinking agent is a water-containing component.

7. Reaction mixture according to any one of the preceding claims, wherein the catalyst is an organic base.

8. The reaction mixture according to claim 7, wherein the organic base is selected from the group consisting of 1,4-diazabicyclo[2.2.2]octane, 1,8-diazabicyclo[5.4.0]undec-7-ene and 1,1,3,3-tetramethylguanidine.

9. Reaction mixture according to any one of the preceding claims, **characterized in that** the intumescent additive is selected from graphite intercalation compounds, expandable silicate material, or combinations thereof.

10. Method of manufacturing a fire protection preformed article comprising the following steps:
i. providing the following components:
a) at least one alkoxysilane-functional polymer which is terminated with alkoxy-functional silane groups of the general formula (I) and/or has alkoxy-functional silane groups of the general formula (I) as side groups along the polymer chain
-X-R³-Si(R¹)ₘ(OR²)₃₋ₘ (I),
in which R¹ is a linear or branched C₁-C₁₆ alkyl radical,
R² represents -H or a linear or branched C₁-C₆ alkyl radical,
R³ is an alkyl radical,
X is -O-, a urethane group -HNCOO or a urea group -NHCONR⁴ with R⁴ = hydrogen, alkyl or aryl,
m is an integer from 0 to 2,
b) at least one further alkoxysilane-functional polymer which is terminated with alkoxy-functional silane groups of the general formula (II) and/or has these as side groups along the polymer chain
-R⁷-Si(R⁵)ₙ(OR⁶)₃₋ₙ (II),
wherein
R⁵ represents a linear or branched C₁-C₁₆ alkyl radical,
R⁶ is -H or a linear or branched C₁-C₆ alkyl radical,
R⁷ is a linear or branched C₁ to C₆ alkyl group, and
n is an integer from 0 to 2,
c) at least one intumescent additive,
d) at least one blowing agent,
e) at least one crosslinking agent,
ii. Mixing the components mentioned in i. and adding at least one catalyst to produce a reaction mixture;
iii. Discharging of the reaction mixture into a mold or a foil with predefined geometry;
iv. Foaming and curing of the reaction mixture and
v. optionally removing the foamed and cured reaction mixture from the mold or foil, or cutting to size.

11. Fire protection preformed article made from a reaction mixture according to any one of claims 1 to 9 or manufactured by the method according to claim 10.

12. Fire protection preformed article according to claim 11, wherein the fire protection preformed article is a fire protection cushion, a fire protection block, fire protection joints or a profile element.

13. Construction element comprising at least one fire protection preformed article according to claim 11 or 12.
